# EUROPEAN PATENT APPLICATION

(11) **EP 1 378 886 A1**
(43) Date of publication of application: **07.01.2004**
(21) Application number: 02077659.7
(22) Date of filing: 02.07.2002
(51) Int. Cl.: G10L 15/22

(54) **Speech recognition device**

(71) Applicant: Ubicall Communications en abrégé "UbiCall" S.A., 7000 Mons (BE)
(72) Inventor: Hennebert, Jean, c/o Ubicall S.A., 7000 Mons (BE); Mosanya, Emeka, c/o Ubicall S.A., 7000 Mons (BE); Zanellato, Georges, c/o Ubicall S.A., 7000 Mons (BE); Hambye,Frédéric, c/o Ubicall S.A., 7000 Mons (BE); Monsanya, Ugo, c/o Ubicall S.A., 7000 Mons (BE)
(74) Representative: Quintelier, Claude

(57) **Abstract**

A speech recognition device having a hidden operator communication unit and being connectable to a voice communication system having a user communication unit, said speech recognition device comprising a processing unit and a memory provided for storing speech recognition data comprising command models and at least one threshold value (T) said processing unit being provided for processing speech data, received from said voice communication system, by scoring said command models against said speech data in order to determine at least one recognition hypothesis (O), said processing unit being further provided for determining a confidence score (S) on the basis of said recognition hypothesis and for weighing said confidence score against said threshold values in order to accept or reject said received speech data, said device further comprises forwarding means provided for forwarding said speech data to said hidden operator communication unit in response to said rejection of received speech data, said hidden operator communication unit being provided for generating upon receipt of said rejection a recognition string based on said received speech data, said hidden operator communication unit being further provided for generating a target hypothesis (Ot) on the basis of said recognition string generated by said hidden operator communication unit, said device further comprising evaluation means provided for evaluating said target hypothesis with respect to said determined recognition hypothesis and for adapting said stored command models and/or threshold values on the basis of results obtained by said evaluation.

## Description

### Background of the invention

### Field of the invention

The present invention relates to the field of speech recognition enabling the automation of services through remote telecommunications means, as for example, automated directory dialling services. Particularly, the present invention relates to implementations in which the speech recognition is supported by an unobtrusive operator intervention.

### Description of the prior art

Automatic speech recognition (ASR) integrates with telecommunication systems to deliver automated services. These systems implement human-machine dialogs which comprise successive verbal interaction between the system and the user. Such dialog systems are responsive to spoken commands that are usually defined in a grammar or word spotting list, from which models are built such, for example, as statistical hidden Markov models (HMM), well known in the art. These models are often built up from smaller models such as subword phoneme models. When the user calls the system and utters a phrase, the ASR system computes one or more recognition hypotheses by scoring command models against the speech input. Each hypothesis is defined by a recognition string representing the transcription of the uttered phrase and a confidence score indicating how much the recognition process is confident about the recognised string. In conventional systems, the confidence score is usually compared to a rejection threshold value T. Typically, if the confidence score is higher than the rejection threshold value, then the hypothesis is accepted by the system that performs an operation accordingly to the recognised string. If the confidence score is lower than the rejection threshold T, then the hypothesis is rejected by the system that may, for example, prompt the user to utter again its input. In-grammar user inputs should have confidence scores higher than the threshold in order to be accepted while out-of-grammar user inputs should be rejected with confidence scores lower than the threshold value. However, the operation of the system could lead to several errors. The most common errors are of two types namely false rejection of a valid user command when the confidence score is lower than the threshold and false acceptation of an invalid user command when the score is higher than the threshold. The rejection threshold T is usually set to ensure acceptable false rejection and false acceptation rates of hypothesis over a wide range of expected operating conditions. However, a threshold T imprecisely set will enable either too many false rejections or too many false acceptation's.

During its operation, conventional dialog systems may also record a progress score indicating how the dialog is progressing. Low progress scores are obtained, for example, if hypotheses are successively rejected, if the user remains silent several times, or if the user protests in some way. If the progress score falls under a particular threshold P, the system may automatically transit to a more explicit level of reacting in order to avoid user frustration as much as possible. A method of this kind has been disclosed in US Patent 4,959,864.

EU patent EP 0 752 129 B1 discloses another method for reducing user frustration. When bad progress scores are obtained, a system operator intervenes in the dialog in an unobtrusive manner. In this way, the machine masks the actions by the operator, whilst at the same time allowing the operator intervention to produce either correctly recognisable entries or such entries that are based on correct understanding of the dialog process. The operator is said to be "hidden" since the user does not notice that the operator has been put in the loop.

A drawback of the known methods is that they are limited to the mere intervention of the "hidden operator" and that there is no learning process based on those interventions.

The present invention relates to implementations in which the speech recognition is supported by such hidden operator interventions. It has been established that in many instances, the rejection threshold T is imprecisely set inducing user frustration, low progress score and triggering inappropriate hidden operator intervention. Particularly, a too high value of T will trigger more hidden operator interventions than necessary, thus implying a high operating cost of the system. Imprecise values of the rejection threshold T are due to the fact that the optimal values are dependent to the operating conditions such as environment, recognition task complexity and even the set of commands defined in the system grammar. One technique for addressing the problem is to perform system tuning by inspecting manually accumulated data related to earlier use of the system. However this technique which involves intervention of speech system specialists remains costly and can only take place when enough data material has been accumulated.

### Summary of the invention

According to the present invention, the above mentioned deficiencies of the prior art are mitigated by an adaptation of system parameters using inputs of the hidden operator. According to one of its aspects, the invention is characterised by a supervised labelling of the hypothesis emitted by the automatic speech recognition system thanks to hidden operator inputs. Once accumulated, the set of labelled hypotheses can be used to update automatically some system parameters in order to improve the overall performance of the system. Since the labelling is fully automated and supervised by the hidden operator, the system adaptation does not require costly intervention of speech system specialists.

According to another of its aspects, the invention is characterised by the automatic adaptation of the rejection threshold T towards more optimal values by using the accumulated hidden operator inputs obtained as described in the main embodiment of the invention. Optimised threshold values can, for example, be obtained by minimising an associated cost function of performing false rejection and false acceptation errors. This method reduces user frustration and the overall operating cost of the system by lowering hidden operator intervention. Advantageously, the same method enables the use of a plurality of thresholds, potentially one for each command set listed in the system grammar and one for each user of the system.

The invention also relates to an apparatus for implementing the methods.

### Brief description of the drawings

The features and advantages of the present invention will be more readily understood from the following detailed description when read in conjunction with the accompanying drawings, in which :
Fig. 1 illustrates a speech recognition device in conjunction with a communication system in accordance with the present invention;
Fig. 2 illustrates a flow diagram for enabling a human-machine dialog using speech recognition supportable by hidden operator intervention enabling automatic adaptation in accordance with the present invention;
Fig. 3 illustrates a flow diagram for deciding whether to accept or reject the speech recognition hypothesis in accordance with the present invention; and
Fig. 4 illustrates a flow diagram for adapting system parameters in accordance with the present invention.

### Detailed description of the invention

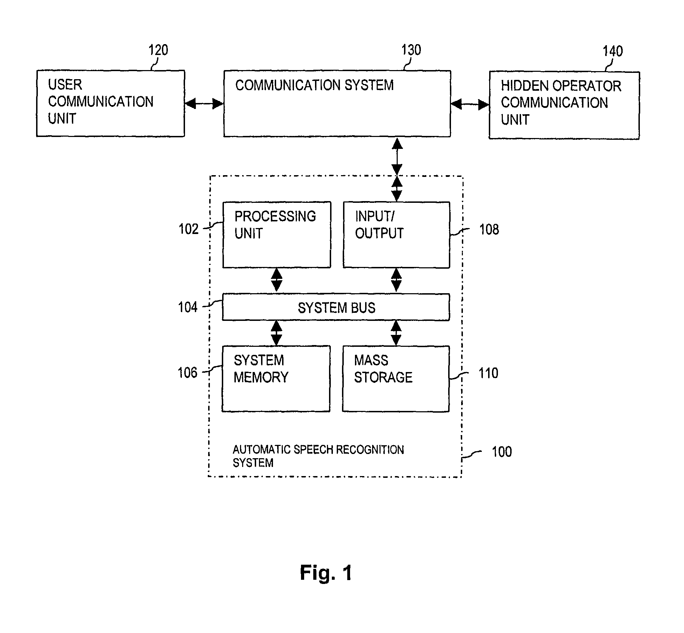

Fig. 1 illustrates an automatic speech recognition (ASR) device 100 in conjunction with a voice communication system 130 in accordance with the present invention. The communication system 130 can be a telephone system such as, for example, a central office, a private branch exchange (PBX) or mobile phone system. It will be readily appreciated by those skilled in the art that the present invention is equally applicable to any communication system in which a voice-operated interface is desired. For example, a speech recognition device supported by operator intervention and enabling automatic adaptation in accordance with the present invention may be easily extended to communication system 130 such as communication network (e.g. a wireless network), local area network (e.g. an Ethernet LAN) or wide area network (e.g. the World Wide Web).

A user communication unit 120 and a hidden operator communication unit 140 are connected to the communication system 130. The communication units 120 and 140 include a bi-directional interface that operates with an audio channel. The communication units 120 and 140 can be, for example, a landline or mobile telephone set or a computer equipped with audio facilities. The speech recognition system 100 includes a general purpose processing unit 102, a system memory 106, an input/output device 108, a mass storage medium 110, all of which are interconnected by a system bus 104. The processing unit 102 operates in accordance with machine readable computer software code stored in the system memory 106 and mass storage medium 110, so as to implement the present invention. System parameters such as acoustic Hidden Markov Models, command models and rejection threshold are stored in system memory 106 and mass storage 110 for processing by processing unit 102. The input/output device 108 can include a display monitor, a keyboard and an interface coupled to the communication system 130 for receiving and sending speech signals. Though the speech recognition system illustrated in Fig. 1 is implemented as a general purpose computer, it will be apparent that the system can be implemented so as to include special purpose computer or dedicated hardware circuits.

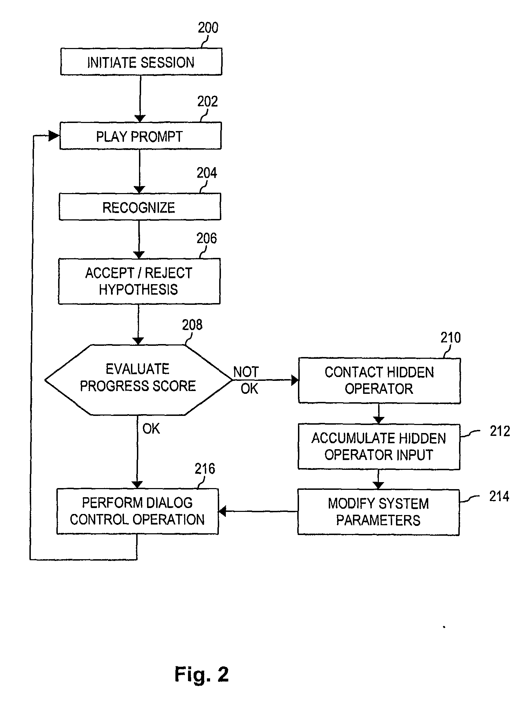

Fig. 2 illustrates a flow diagram for enabling a human-machine dialog using speech recognition supported by hidden operator intervention and enabling automatic adaptation. The flow diagram of Fig. 2 illustrates graphically the operation of the speech recognition device 100 in accordance with the present invention. Program flow begins in state 200 in which a session between a caller using communication unit 120, communication system 130 and speech recognition system 100 is initiated. For example, a call placed by a user with a telephone device is routed by communication system 130 and received by the speech recognition system 100 which initiates the session. In that particular example, the communication system 130 can be the public switched telecommunication network (PSTN). Alternately, the session is conducted via another communication medium. The program flow subsequently moves to state 202 wherein the speech recognition system 100, by the way of input/output device 108, presents to the user verbal information corresponding to a program section. For example, the system prompts the user to say the name of the person or department (s)he would like to be connected with.

The program flow then moves to a state 204. In the state 204, the speech recognition system 100 attempts to recognise speech made by the user as the user interacts according to the prompts presented in state 202. State 202 and 204 may perform synchronously if the speech recognition system 100 has barge-in capability which allows a user to start talking and be recognised while an outgoing prompt is playing. In state 204, the speech recognition system 100 is responsive to spoken commands associated to one or more models such, for example, as statistical hidden Markov models (HMMs). It will be readily appreciated by those skilled in the art that HMMs are merely illustrative of the models which may be employed and that any suitable model may be utilised. Now, in state 204, when the user utters a phrase, the speech recognition system 100 will compute the best recognition hypothesis (O) by scoring command models against the speech input. The hypothesis output at state 204 is defined by a recognition string representing the transcription of the uttered phrase and a confidence score S indicating how much the recognition process is confident about the recognised string. For sake of clarity, the present description of the preferred embodiment relates to a method in which a single hypothesis is output by state 204. However, the method can be generalised to recognitions which output multiple hypotheses, so-called n-best hypotheses. Also, a variety of techniques exist for computing the confidence score S. Examples of suitable techniques are described in the prior art such as for example in Wessel, F. et al., Using Word Probabilities as Confidence Measures, ICASSP, Vol. 1., pp 225-228, May 1998.

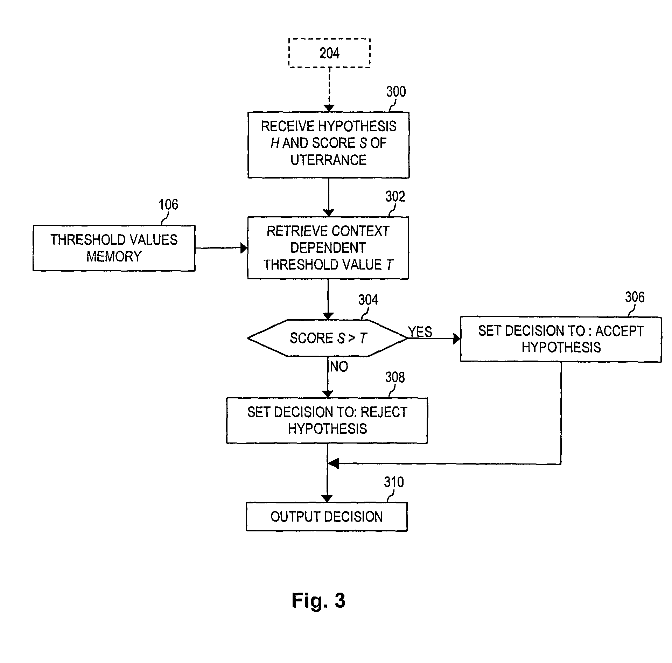

The program flow moves thereafter to state 206. In state 206, the speech recognition system takes the decision whether to accept or reject the hypothesis according to a context dependent rejection threshold T. State 206 will be described more thoroughly with reference to Fig. 3. Then program flow moves to state 208. In state 208, a determination is made as to whether the system should contact an operator or continue with the dialog based on the evaluation of a progress score indicating how well the dialog is progressing. Low progress scores are obtained, for example, if hypotheses are successively rejected, if the user remains silent several times, or if the user protests in some way. If the progress score is below a predefined threshold, the program flow moves to state 210 otherwise it continues in state 216.

In state 210, a hidden operator is contacted or alarmed by the communication system 130 and the communication device 140. Information about the progress of the dialog is presented to the operator. In its simplest form, this presentation is performed by replaying the verbal items in the form as actually exchanged in states 202 and 204. If a graphical display is available to the operator, hypotheses with associated strings and confidence scores can also be presented, or other information related to the current status of the dialog. This will often reveal user speech inputs that were too difficult for the system to recognise. While contacting the hidden operator in state 210, the system will preferably put the user on hold until the interaction with the hidden operator is over. The operator is said to be "hidden" since the user may not be aware that the hidden operator has been put in the loop. Although not illustrated on Fig. 2, the system may be implemented to continue asynchronously the dialog with the user, instead of waiting for the hidden operator input.

In state 212 the hidden operator will enter his input into the communication device by means of a hand operated device, such as a computer, a telephone keyboard, or by a spoken answer. The hidden operator input determines a target hypothesis (Ot). In the case of a spoken answer given by the hidden operator, a similar recognition process will be applied on the hidden operator's input in order to determine the target hypothesis (Ot). A correlation will be established between the speech recognition hypothesis (O) emitted in state 204, and the target hypothesis (Ot). This correlation will for example be established by comparing the strings of characters within O and Ot and by determining whether O was correct or not. The hypothesis are labelled and accumulated accordingly in state 212. This labelling will for example reveal hypothesis that were falsely rejected or accepted in state 206. In state 214, some parameters of the speech recognition system 100 are modified, taking into account operator inputs accumulated in state 212 throughout past and current sessions. As described later in an embodiment of the present invention, it is an object to modify the rejection threshold used in state 206 towards more optimal values by, for example, minimising an associated function related to the cost of false rejection and false acceptation errors.

In state 216, speech recognition system 100 performs dialog control operations according to the output of state 204, 206, 208 and potentially 212. For example, if the recognised string hypothesis contains a valid department name that was accepted in state 206 and with a fairly good progress score, state 216 loops back in state 202 and prompt the user with a new question according to the dialog flow. In another example, if the recognised string hypothesis is rejected in state 206 and the progress score is below threshold in state 208, the system triggers hidden operator intervention in state 210, 212 and 214 that may confirm or infirm the hypothesis emitted in state 204.

In a more sophisticated embodiment of the present invention and in case of a directory dialling application in which the purpose is to perform call redirection, it should be emphasised that the called party can play the role of a hidden operator. The system can be implemented in a similar manner as described in Fig. 1 and Fig. 2 in which the called party undergoes the operations as described in state 210, 212 and 214. The person or party recognised by the device will then be put into contact with the communication system, but not with the calling party. The recognised person can then accept the incoming call or reroute it towards another person who was recognised by the first recognised person.

The method by which the decision whether to accept or reject the hypothesis in state 206 is explained in the flow diagram of Fig. 3. The flow diagram of Fig. 3 begins in state 300. In state 300, the hypothesis and its corresponding confidence score S are received from state 204. In state 302, the threshold T is set to one of a plurality of fixed values stored in system memory 106. In another embodiment of the present invention, the threshold value T that is retrieved from system memory 106 is selected according to some dialog context variables stored in the memory. The threshold value T is said to be context dependent. For example, if the caller is a frequent user of the system, it is probable that the uttered phrase will be defined in the command grammar and vocabulary of the speech recognition system 100. In such case, the block decision 206 will benefit of a low threshold value to avoid as much as possible false rejection of correct hypothesis. On the other hand, if the user calls the system for the very first time, there is a chance that the uttered phrase will not be defined in the command grammar and vocabulary of the speech recognition system 100. In that case, the threshold value T should be higher to avoid potential false acceptation. Consequently, the threshold value which is retrieved in state 302 from system memory 106 is dependent to context parameters of the undergoing dialog such as, though not exclusively, the set of commands used in state 204, the recognised hypothesis which is output from state 204, the prompt played in state 202, the user identification that is potentially made available from state 200 and the user location that may also be available from state 200.

Context dependent threshold values T stored in system memory 106 are initially set, in a conventional manner, to work well for an average user in normal conditions. However, during system operation, the initial threshold value may, as explained in another embodiment of the present invention, be modified towards more optimal values through an adaptation process thanks to the supervised labelling of the hidden operator. In state 304, the threshold value T is compared to the obtained hypothesis confidence level S. If the confidence score S exceeds the rejection threshold T, the hypothesis is accepted (state 306). If the confidence score S is below T, the hypothesis is rejected (state 308). Finally, in state 310, the accept/reject decision is then output for use by the remaining states as described in Fig. 2.

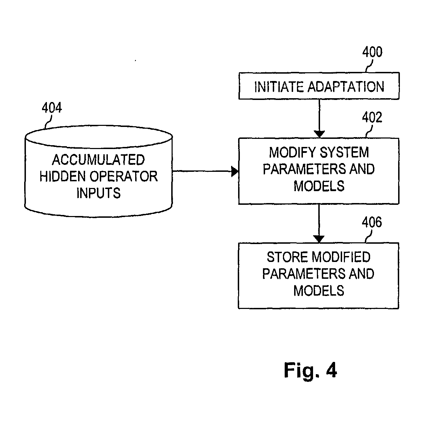

The method by which speech recognition system 100 modifies its parameters in state 214 is explained in more details in the flow diagram of Fig. 4. The program flow starts in a state 400. In state 400, the decision whether to start with the adaptation process is taken. For example, the adaptation may start as soon as a hidden operator input has been accumulated in state 212 and prior to termination of a user session. Such a strategy will enable that the modified parameters can be immediately put in use. In another example, the adaptation may start after termination of the user session or a plurality of user sessions. Such a strategy will usually enable a more accurate adaptation of parameters since more data are available to estimate the modifications. Alternately, the adaptation may start while a predetermined amount of hidden operator intervention has been accumulated in state 212 or while a predefined amount of speech signal is received in state 204.To this purpose a counter is provided for counting a frequency at which a user uses the device. Now, in state 402, the parameters of the speech recognition system 100 are modified by using the labelled hypothesis accumulated as described in the preferred embodiment of the present invention and which are stored in a database 404 located in the system memory 106 or mass storage 110. It will be readily appreciated by those skilled in the art that any known supervised adaptation procedures can potentially be used. Once the adaptation terminates, program flow moves to a state 406. In state 406, the modified parameters are stored back in system memory 106 or mass storage 110.

Now, in an alternate embodiment of the present invention, it is an object to modify the context dependent rejection threshold value T retrieved in state 302 and used in state 304 towards a more optimal value T*. The labelled hypotheses accumulated in state 404 are used to modify the threshold value T through a minimisation procedure of a cost function of falsely accepting and rejecting hypotheses. The cost function is usually defined as the sum of the first probability of false acceptation given the speech input weighted by the first cost of making a false acceptation and the second probability of false rejection given the speech input weighted by the second cost of making a false rejection. Any other cost function defined in the art can be used. The minimisation procedure can, for example, be implemented with a stochastic gradient descent known in the art. That procedure can be intuitively explained with the following example. In state 204, a user utters a command and the speech recognition emits a hypothesis H with confidence score SH. In state 206, let us assume that the retrieved threshold value T is higher than the score SH. The hypothesis is rejected and the progress score triggers a hidden operator intervention in state 208. In that particular example, let us again assume that the hidden operator intervention reveals that the hypothesis was falsely rejected in state 206. If such false rejections are repeatedly detected thanks to the hidden operator intervention, chances are that the context dependent threshold value T is too high and should be modified towards a more optimal lower value T*. In the case of a minimisation procedure using a gradient descent, the estimation of the gradient of the cost function as defined earlier will indicate how much the threshold value T should be modified.

Context dependent threshold values T are stored in system memory 106 and are initially set, in a conventional manner, to work well for average users in normal conditions. In a refined embodiment, the same initial context independent threshold value T is used for all context conditions and is subsequently modified by the adaptation procedure towards a plurality of context dependent threshold values T*1, T*2, T*3, ... according to contexts appearing sequentially during system usage. For example, if a predetermined amount of frequent user access has been accumulated, the adaptation process may modify the initial threshold value T towards a value T*1 that is associated to the context of frequent users of the system. In another example, T*2 will be associated to first-time users of the system, T*3 will be associated to users calling from a mobile phone etc. To this purpose the dialog context information comprises a first field for indicating the frequency at which the user uses the device.

In a more sophisticated embodiment, context dependent thresholds are associated to the recognised hypothesis H, output of state 204 and adapted towards more optimal values T*H. For example, if 10 commands are listed in the recognition vocabulary of the speech recognition system, 10 potentially different threshold values T*H1, T*H2, ..., T*H10, are computed through the adaptation procedure such as described earlier. These context dependent threshold values are subsequently retrieved according to the hypothesis H emitted in state 204 and used in states 302 and 304. The threshold values could for example be selected in function of the used communication system. When a mobile phone is used in a place with a lot of background noise, leading to a poor receiving quality, a lower threshold value could be used. In order to enable such a selection depending from the used communication system, the dialog context information comprises a second field provided for storing identification data identifying the used voice communication system.

## Claims

1. A speech recognition device having a hidden operator communication unit and being connectable to a voice communication system having a user communication unit, said speech recognition device comprising a processing unit and a memory, said memory being provided for storing speech recognition data comprising command models and at least one threshold value (T) said processing unit being provided for processing speech data, received from said voice communication system, by scoring said command models against said speech data in order to determine at least one recognition hypothesis (O), said processing unit being further provided for determining a confidence score (S) on the basis of said recognition hypothesis and for weighing said confidence score against said threshold values in order to accept or reject said received speech data, said device further comprises forwarding means provided for forwarding said speech data to said hidden operator communication unit in response to said rejection of received speech data, said hidden operator communication unit being provided for generating upon receipt of said rejection a recognition string based on said received speech data, **characterised in that** said hidden operator communication unit is further provided for generating a target hypothesis (Ot) on the basis of said recognition string generated by said hidden operator communication unit, said device further comprising evaluation means provided for evaluating said target hypothesis with respect to said determined recognition hypothesis and for adapting said stored command models and/or threshold values on the basis of results obtained by said evaluation.

2. A device as claimed in claim 1, **characterised in that** said evaluation means are provided for realising said adaptation of said threshold values by a minimisation procedure of a cost function of falsely accepting and falsely rejecting said determined speech hypothesis.

3. A device as claimed in claim 1 and 2 **characterised in that** said cost function is defined as a sum of a first probability of false acceptation weighted by a first cost of performing a false acceptation and a second probability of false rejection weighted by a second cost of performing a false rejection.

4. A device as claimed in anyone of the claims 1 to 3, **characterised in that** said memory being further provided for storing dialog context information collected during a use of said device, said evaluation means are provided for realising said adaptation of said at least one threshold value (T) towards a plurality of threshold values (T1, T2, ...) depending of said dialog context information.

5. A device as claimed in claim 4, **characterised in that** said evaluation means comprises a counter provided for counting a frequency at which a user uses said device, said dialog context information comprises a first field indicating said frequency.

6. A device as claimed in claim 4 or 5, **characterised in that** said dialog context information comprises a second field provided for storing identification data identifying said voice communication system connected to said device.

7. A device as claimed in anyone of the claims 4 to 6, **characterised in that** said evaluation means are provided for realising said adaptation of said threshold values depending on said command model used for determining said recognition hypothesis.
